# EUROPEAN PATENT SPECIFICATION

(11) **EP 0 600 934 B1**
(45) Date of publication and mention of the grant of the patent: **19.03.1997**
(21) Application number: 92916767.4
(22) Date of filing: 06.08.1992
(51) Int. Cl.: C08B 37/00, A61K 31/725, A61K 31/73

(54) **OLIGOSACCHARIDES OF DERMATAN SULPHATE, PROCESS FOR THEIR PRODUCTION, AND ASSOCIATED PHARMACEUTICAL COMPOSITIONS**
Dermatansulfatoligosaccharide, Verfahren zu ihrer Herstellung und diese enthaltende phamazeutische Zusammensetzungen
OLIGOSACCHARIDES DE SULFATE DE DERMATAN, PROCEDE DE PRODUCTION, ET COMPOSITIONS PHARMACEUTIQUES ASSOCIEES

(30) Priority: 28.08.1991 IT MI91230
(43) Date of publication of application: 15.06.1994
(73) Proprietor: OPOCRIN S.p.A., 41040 Corlo di Formigine (Modena) (IT)
(72) Inventor: MASCELLANI, Giuseppe, I-41040 Corlo di Formigine (IT); LIVERANI, Lino, I-41040 Corlo di Formigine (IT); BIANCHINI, Pietro, I-41040 Corlo di Formigine (IT)
(74) Representative: Bianchetti, Giuseppe
(86) International application number: EP9201791
(87) International publication number: WO9305075

(56) References cited:
- WO-A-90/04607
- WO-A-91/15217
- JOURNAL OF BIOLOGICAL CHEMISTRY. (MICROFILMS) vol. 261, no. 19, 5 July 1986, BALTIMORE, MD US pages 8854 - 8858 D. M. TOLLEFSEN ET AL. 'Molecular size of dermatan sulfate oligosaccharides required to bind and activate heparin cofactor II"
- JOURNAL OF BIOLOGICAL CHEMISTRY vol. 265, no. 30, 25 October 1990, BALTIMORE, MD US pages 18263 - 18271 M. M. MAIMONE ET AL. 'Structure of a dermatan sulfate hexasaccharide that binds to heparin cofactor II with high affinity' cited in the application

## Description

The invention relates to oligosaccharides of dermatan sulphate having biological properties and more particularly having the property of inhibiting the movements of the Ca ion in human platelets incubated with polymorphonucleate autologous leukocytes stimulated by chemotactic agents. This particular action comes within the more general framework of a pharmacological activity such as to inhibit inflammation, platelet aggregation and certain contributory causal factors in thromboembolic diseases. The invention also concerns a process for obtaining the said products, and pharmaceutical compositions containing the said products as the active principle.

Dermatan sulphate has always been regarded as a heterogeneous polysaccharide consisting mainly of the disaccharide (II)

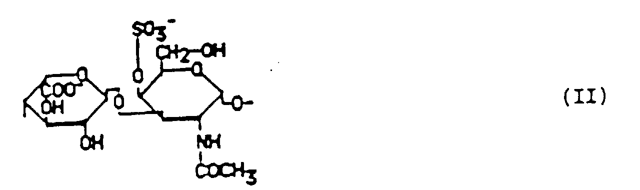

European Patent 97,625 claims a process for the preparation of dermatan sulphate from mixtures of polysaccharides, the said dermatan sulphate having an anticongestive and cicatrizing action. Patents EP A 199,033 and EP A 238,994 claim a process for the extraction and purification of dermatan sulphate and its use as an antithrombotic drug in the prophylaxis of venous thromboses.

EP 221,977 claims inter alia dermatan sulphate fractions having molecular weights lying between 2000 and 7000 Daltons, but more particularly between 4000 and 6000 Daltons, obtained by radical depolymerization of dermatan sulphate. Likewise EP A 269,937 claims low molecular weight glycosamine-glycans obtained by gamma radiations. The products claimed in the above-mentioned patents are acclaimed as having a pharmacological and clinical activity in the prophylaxis of venous thromboses. Application PCT EP/89/01214 of the present applicant describes a process of oxidation and reduction of the C₂-C₃ bonds of the uronic acids of dermatan sulphate, in which the non-sulphated uronic acids (practically all of them) are oxidized to dialdehydes and then reduced to hydroxymethyl derivatives. The said patent then claims fractions of the general formula (III) 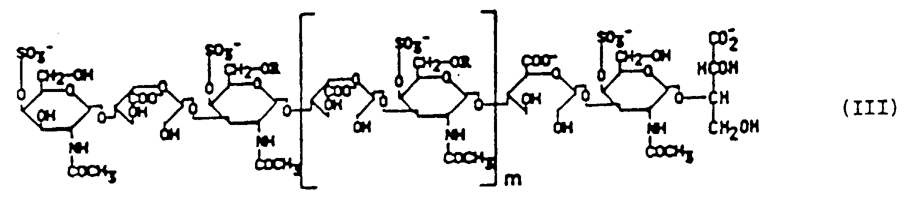 where m can vary so as to include fractions of molecular weight from 9400 to 22000 Daltons, and the specific rotation [α]²⁰_{D} lies between -13° and -5°.

The glycosamine-glycans located on the cell surfaces or in the extracellular matrices, and among these dermatan sulphate in particular, interact with heparin cofactor II (HCII) to inhibit the proteolytic activity of the thrombin involved in blood coagulation: in this connection see D.M. Tollefsen in "The Metabolic Basis of Inherited Disease" (Scriver C.R., Beaudet A.L., Sly W.S. and Valle D. ed.s), 6th Ed., pp. 2207-2218, Mc Graw-Hill, New York (1989). A hexasaccharide, containing iduronic acid 2-sulphate, Ido-(2-S0₃⁻), obtained by nitrous acid deamination of a partly N-deacetylated dermatan sulphate, has been reported to be the oligosaccharide sequence of dermatan having the highest affinity for heparin cofactor II (HCII) (M.M. Maimone, D.M. Tollefsen, J. Biol. Chem. 265 (30), 18263-18271 (1990)).

Surprisingly it has now been found that the particular sequence contained in dermatan sulphate and believed by Maimone and Tollefsen to coincide with the active site for interaction with HCII is much more complex than described, and that this highly sulphated sequence is contained in a cluster. Whereas it had hitherto been thought that the disulphated disaccharides (1->4)-O-(2-O-sulpho-α-L-idopyranosyluronic acid)-(1->3)-O-(2-acetamido-2-deoxy-β-D - galactopyranosyl - 4-sulphate (IV) 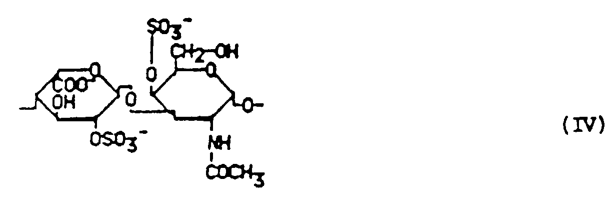 and (1->4)-O-(α-L-idopyranosyluronic acid)-(1->3)-O-(2-acetamido-2-deoxy-β-D-galactopyrosanosyl - 4,6-bis-O-sulphate (II') 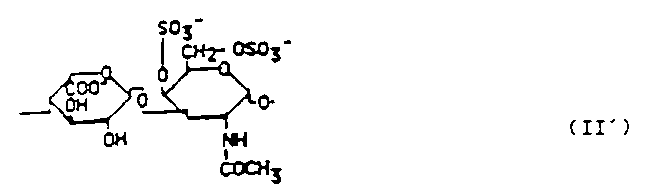 were contained at random and discontinuously in the structure of dermatan sulphate, it has surprisingly been found that the highly sulphated oligosaccharide sequences, obtained by a process that is also a subject of the invention, once isolated from the structural context of dermatan sulphate, no longer have any activity on heparin cofactor II, but exhibit therapeutically valuable pharmacological activities in the treatment of inflammatory, arthritic, thrombotic and atherosclerotic processes.

These compounds have in fact proved to be active in inhibiting production of free radicals by leukocytes, adhesion of polymorphonucleate leukocytes to the endothelium, platelet aggregation and cytoplasmatic movements of calcium in human platelets coincubated with PMNs stimulated by a chemotactic agent. These biological actions are of therapeutic value in diseases of chronic inflammatory (arthritic) or thrombotic type and in cardiovascular diseases in general. The pharmacological activity has proved to be considerable, being at least double or triple than that of other oligosaccharides in the heparin family, and unexpected since it was known, at least with regard to heparin, that the pentasaccharide of the active site of antithrombin III (ATIII) is of pharmacological importance solely in so far as it is inserted in a long heparin polysaccharide chain and solely in so far as it possesses anticoagulant pharmacological activity.

One subject of the invention comprises novel oligosaccharides and fractions containing them. The oligosaccharides of the invention contain galactosamine N-acetylate-4-sulphate (and possibly also 6-sulphate) and L-iduronic acid 2-sulphate with at least one possible variant of a D-glucuronic acid 2-sulphate. The oligosaccharides of the invention have one unit of N-acetylgalactosamine 4-sulphate on the "non-reducing" side and a 2,3,4-trihydroxybutyric acid residue, the remnant of demolition of a uronic acid, indicated by Z, in the "reducing" termination. The oligosaccharides of dermatan sulphate that form the subject of the present invention have a structural formula as shown diagrammatically by sequence (I) 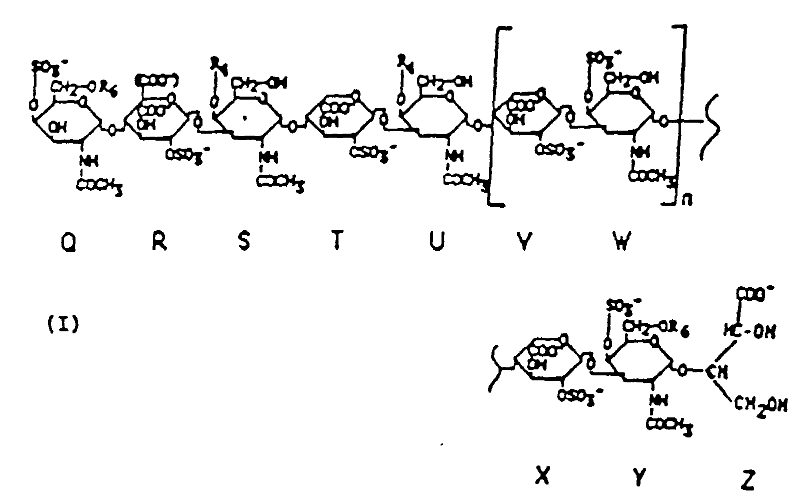 in which:
n = 0, 1 or 2;
R₄ = SO₃⁻ or H;
R₆ = H or SO₃⁻;
Z = remnant of demolition of a uronic acid;
Q, S, U, W and Y = galactosamines;
R, T, V and X = residues of iduronic acid 2-sulphate,
at least one of them however being possibly a residue of glucuronic acid 2-sulphate.

The oligosaccharides of the invention include the structures symbolized by Q, R, S, T, U, V, W, X, Y and Z. One oligosaccharide of the present invention is formed by the sequence QRSTUVWXYZ. Other oligosaccharides consist respectively of the sequences QRSTUXYZ, STUVWXYZ, and UVQXUZ, where Q and Y can be either N-acetylgalactosamine-4-sulphate or N-acetylgalactosamine-4,6-disulphate. The said oligosaccharide fractions of dermatan sulphate are of a type obtainable by a process including the following reactions, as indicated in Diagram 1 below: 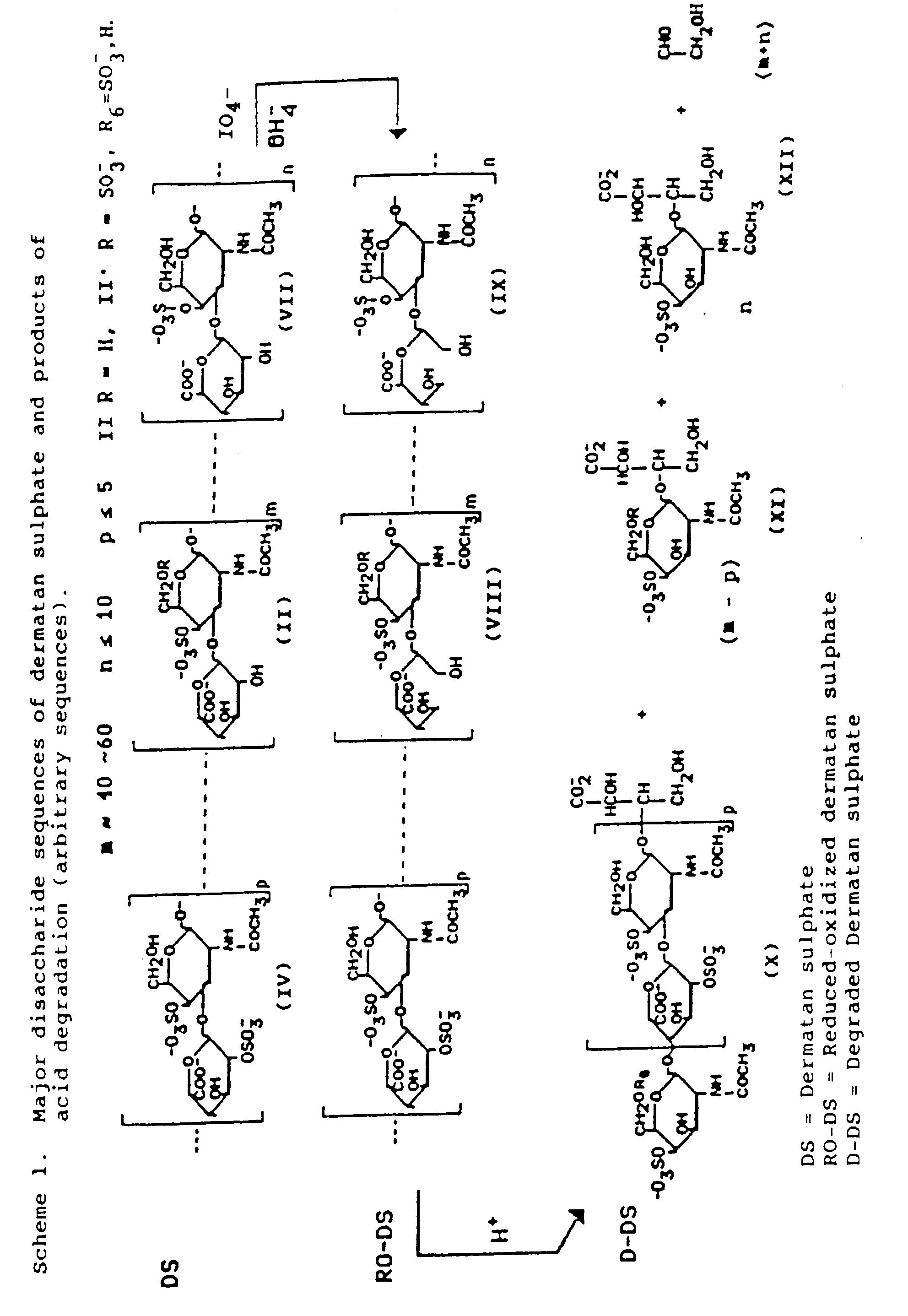
- Dermatan sulphate (DS) having the characteristics described in WO 93/05074, and containing a high percentage of disulphate disaccarides (IV), measurable by enzymatic hydrolysis with chondroitinase ABC and evaluation of corresponding unsaturated disaccharide ΔDi-diS_{B}, and characterized by a ¹³C-NMR spectrum having the characteristic minor signals I*₁ (δ102), I*₂ (δ80), I*₄ (δ74), I*₃ (δ69.5), I*₅(δ68.6), is subjected to oxidation with periodic acid in a neutral medium;
- the oxidation product obtained, having the C₂-C₃ bonds of the non-sulphated uronic acids oxidized to dialdehydes of type (V) 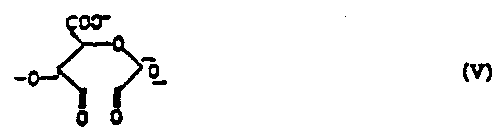 is reduced with sodium borohydride to a di(hydroxymethyl) derivative (VI) 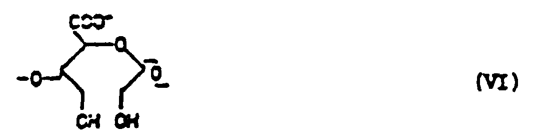
- the product obtained, designated "oxidized and reduced dermatan sulphate" (RO-DS), is subjected to controlled acid hydrolysis which gives rise only to hydrolysis of the semi-acetal bonds between uronic acids, with the C₂-C₃ bonds oxidized (open), and aminosugars.

Not very severe conditions would give rise to medium-long chain fragments lacking uniformity; oversevere conditions would give rise to hydrolysis of all the semi-acetal bonds between the sugars and certainly also to hydrolysis of the ester bonds of the sulphate groups. Other subjects of the present invention are therefore the conditions for acid hydrolysis conducted with acid (polysulphonic) resins so as to guarantee the acidity and ionic strength conditions suitable for hydrolysing the weaker semi-acetal bonds only and leaving the highly sulphated sequence contained in the dermatan sulphate unchanged.

### EXAMPLE 1

### a) Preparation of dermatan sulphate

Grind up 65 kg of bovine (or porcine) intestinal mucosa and place in reactor with 75 litres of water. Heat to 60° and add 430 g of sodium chloride and 150 g of papain 1:350 (Merck). Correct pH to 6.3 with sodium acetate. Keep the mass stirring for 4 h at 60°C. After 3.5 hours there is already no further development of free amino acids in the proteolytic process. Heat the mass to 78°C for 10' and then filter through a filter-press on a filtering auxiliary (dicalite). 120 litres of filtrate are obtained. Percolate the solution at 45°C in a chromatographic column 10 x 80 cm containing Lewatite MP 5080 in Cl⁻ form. Remove the percolate. Wash the resin with 12 litres of 0.6 M Nacl solution, then elute with 18 litres of 1.8 M Nacl solution, with a flow rate of 2.5 BV/h (Bed Volume/h). Collect the solution and concentrate to 5 litres and to 1 M NaCl through reverse osmosis. Add 0.6 volumes of ethanol to the solution. Leave to stand for 10 hours at 5°C. Filter. To the filtrate add another 7 litres of ethanol. A precipitate of raw dermatan sulphate is obtained; collect by filtering. Redissolve the solid in 1.5 litres of water brought to 0.5 M with copper acetate. To this solution add 100 g of dihydrated rameic chloride and 3 litres of ethanol. On standing, a precipitate is formed, which is collected by filtering, washed for a long time with ethanol, redissolved in 0.5 l of water acidified to pH 5.5 with acetic acid, and passed over a chromatographic column 4 x 25 cm containing Chelex 100 (BioRad) in H⁺ form. The solution obtained from the column is salified with NaOH to pH 6.2 and lyophilized. 39.6 g of pure dermatan sulphate are obtained. The following analyses are performed on the dermatan sulphate:
- molecular weight (MW, by HPLC over Protein Pack 125-300 columns, mobile phase 0.125 M Na₂SO₄ and 2 mM NaH₂PO₄ at pH 6, on 3rd degree polynomial calibration curve obtained with molecular weight standards);
- sulphur percentage, uronic acids percentage, SO₃⁻/COO⁻ (by potentiometric method according to Mascellani et al., Il Farmaco Ed. Pr. 43, 165 (1988));
- disaccharide composition according to Yoshida et al. (Anal. Biochem. 177, 327 (1989));
- ¹³C-NMR;
- in vitro activity on HCII evaluated by chromogenic method and with Stachrom D.S. kit (Diagnostica Stago containing CBS 34.47 substrate) according to Dupoury et al., Thromb. Haemost., 60, 2, 236 (1988)) against WHO's heparin 4th Standard at 193.4 IU/mg;
- in vivo antithrombotic activity evaluated in the vena cava ligature model in the rat, according to Rayers et al., Thromb. Res. 18, 699 (1980).

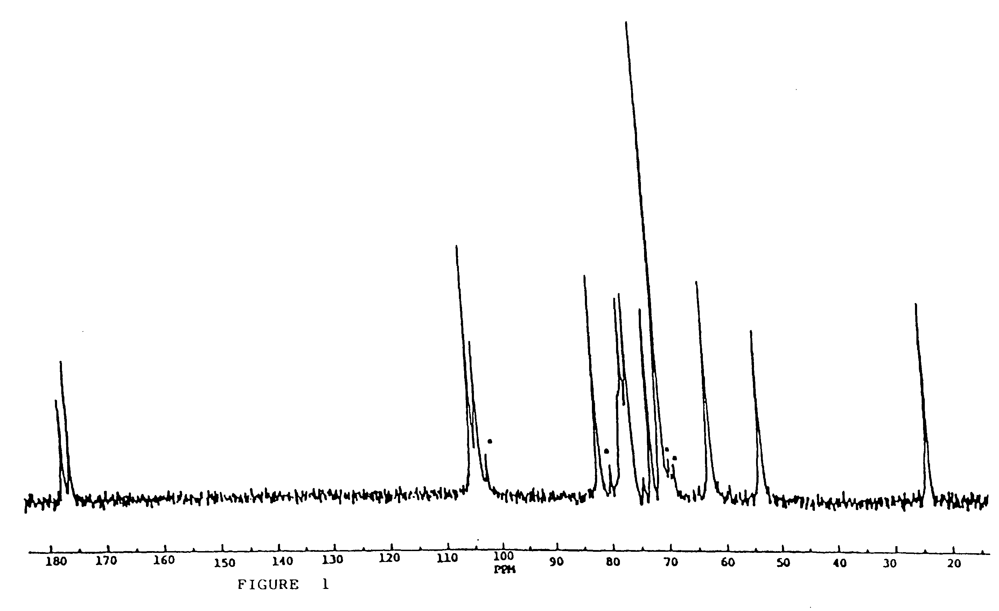

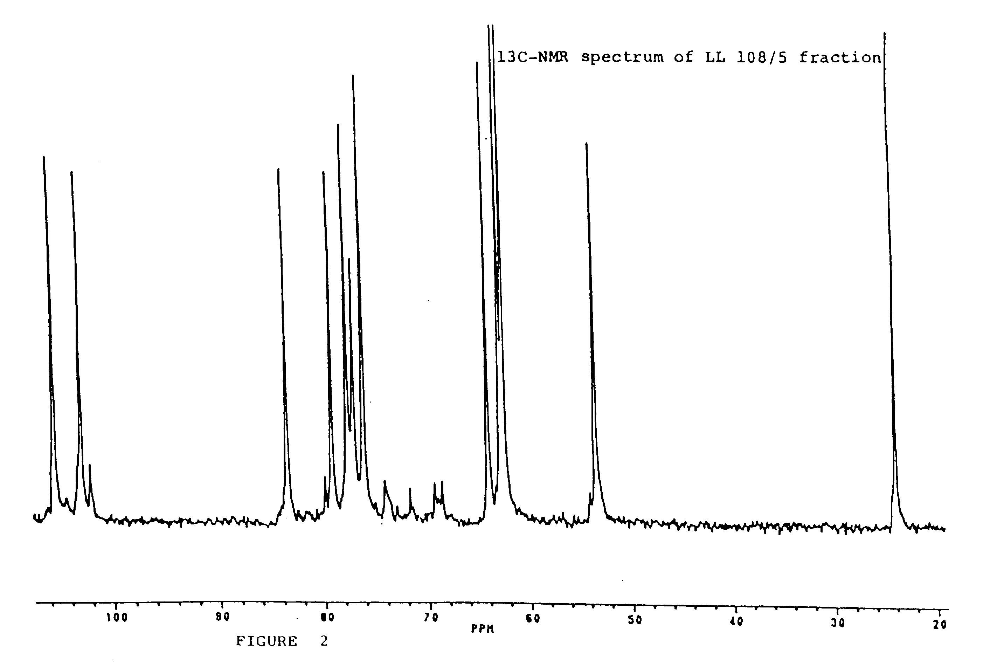

The DS obtained has the following characteristics: MWp 25,600 d (MWw = 28,500, MWn = 23,600, D = 1.21); sulphur 5.94; uronic acids 33%; SO₃⁻/COO⁻ = 1.09; [α]²⁰_{D} = -60°; disaccharide composition: ΔDiOS = 0.9%; ΔDi6S = 2.7%; ΔDi4S = 84.7%; ΔDi-2,6diS = 0.3%; Δ Di-2,4diS = 9.2%; Δ Di-4,6diS = 2.0%; activity on heparin co-factor II, a-HCII = 245 U/mg; ED50 = 1.02 mg/kg i.v. The DS has the ¹³C-NMR spectrum in Fig. 1.

### b) Preparation of reduced-oxidized dermatan sulphate

Dissolve 100 g of dermatan sulphate, obtained according to a), in a liter of water, and slowly add 800 ml of a 0.5 M solution of NaIO₄. Leave the solution stirring for 4 hours, then cool in thermostatic bath at 10°C, bring to pH 8 with N NaOH and very slowly, with stirring, add 80 g of NaBH₄ in the period of 4 hours. At the same time add dilute acetic acid so that the pH remains in the range 7.5-8.5. Allow to stand for one night, bring the pH to 4 with 8 N HCl in order to favour the destruction of the excess NaBH₄ by stirring for an hour at room temperature. Then bring the pH to 5.5 with NaOH. Precipitate the product twice with three volumes of ethanol, equal to six liters per time. After filtering and drying, 80 g of oxidized and reduced dermatan sulphate (RO.DS) are obtained and coded OP723. The RO.DS has the following characteristics: MW = 15,200; sulphur 5.9%; uronic acids 32.4%; SO₃⁻/COO⁻ = 1.1; [α]²⁰_{D} = -8°.

### c) Fractionation of RO-DS by molecular weight

5 g of the product designated OP723, obtained as above, were fractioned by gel permeation on Ultrogel AcA54 (IBF) contained in a 5 x 84 cm column.

Chromatography was carried out in 1N Nacl with a rate of flow of 2 ml/minute. The effluents were monitored with UV detector equipped with continuous flow cell. 20 ml fractions were collected, and 7 pools of about 150-200 ml each were made. Collection of the fractions in pools was carried out on the basis of the absorbancy values recorded on the detector.

The fractions were concentrated in a rotary evaporator to a volume between 80 and 120 ml. The precipitated sodium chloride was removed by filtering. The solutions, brought to pH 5.3 with acetic acid, were treated with two volumes of ethanol. The oily precipitate was redissolved in water and reprecipitated twice more with ethanol and acetone; when necessary the products obtained were desalted on Trisacryl CF 05 M (IBF) in a 5 x 38 cm column with a flow rate of 5 ml/minute. The solutions obtained were concentrated and the products again precipitated with ethanol. All fractions were found to be free from sodium chloride in the AgNO₃ test. The products coded LL 108 were obtained and are shown in Table I. The physicochemical characteristics of the various fractions are also given.

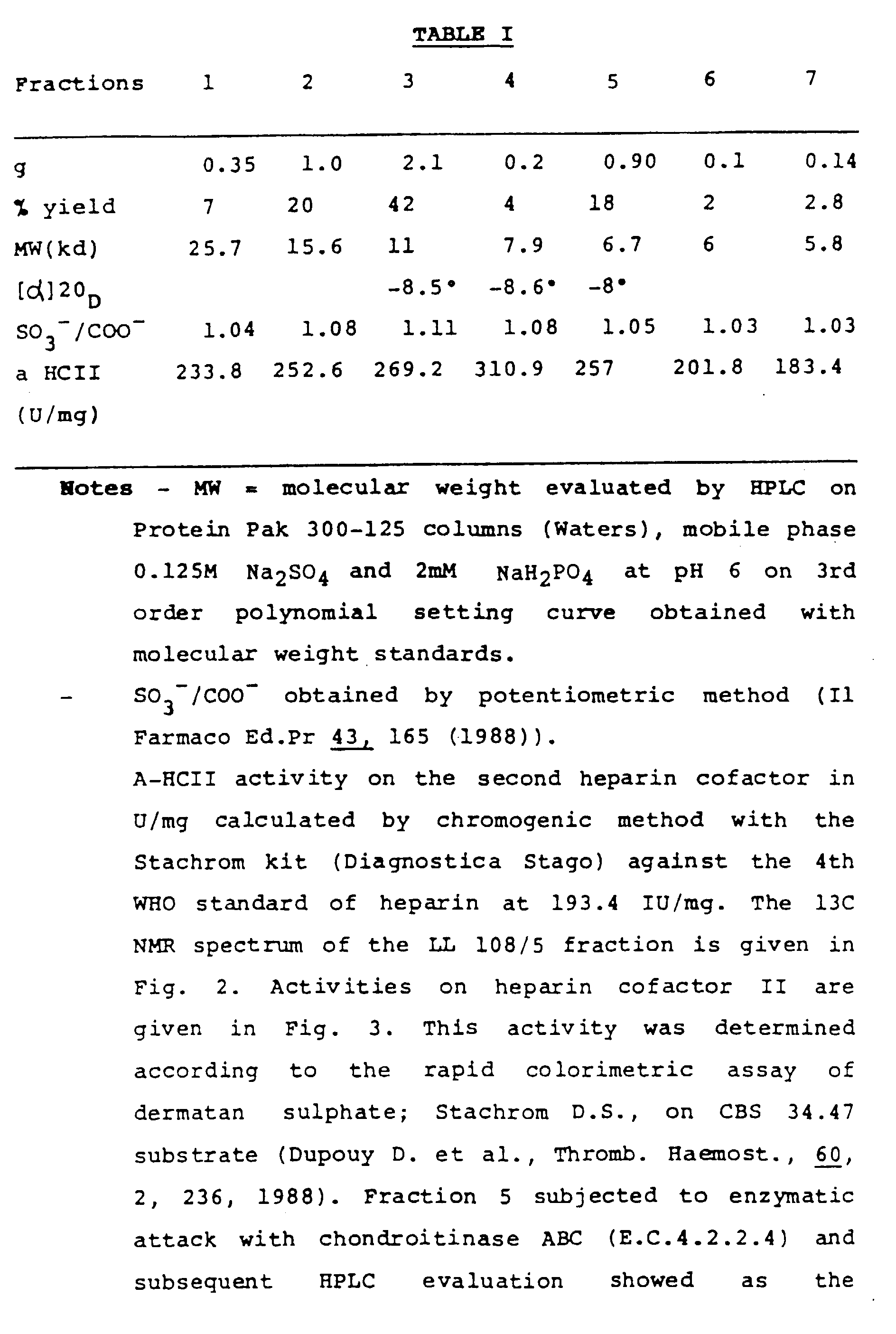

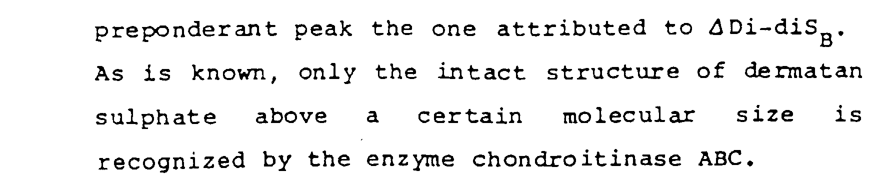

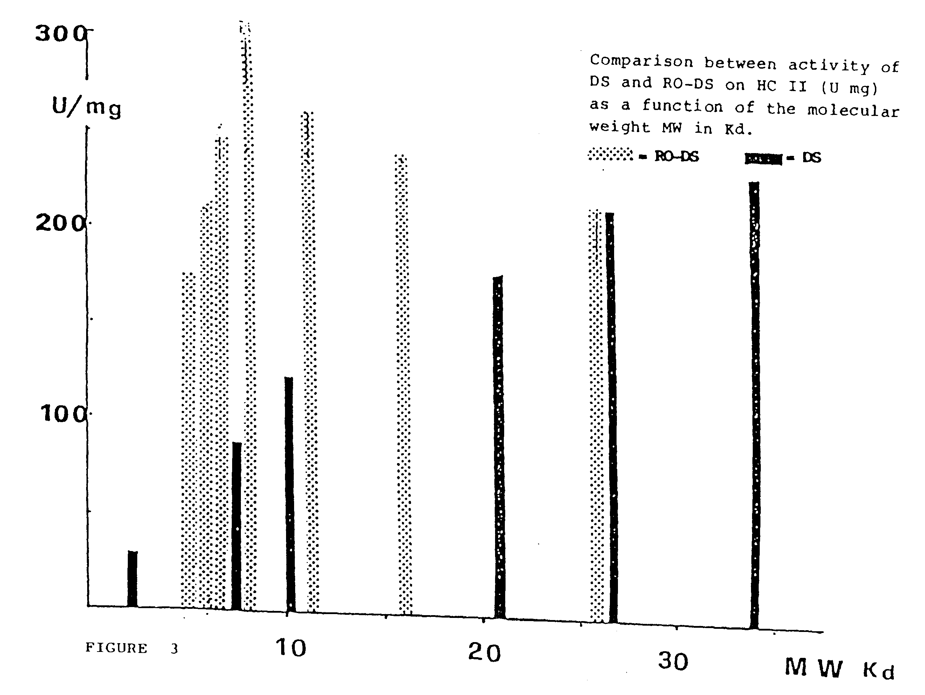

As is clear from Table I and Fig. 3, some RO-DS fractions, in the molecular weight range between 6000 and 11000 Daltons, have a surprising activity on HCII. These fractions, as shown by the analysis of the constituent disaccharides, are particularly rich in disulphated disaccharides (Δ Di-diS_{B})

### d) Obtaining a fraction (I) through controlled acid hydrolysis

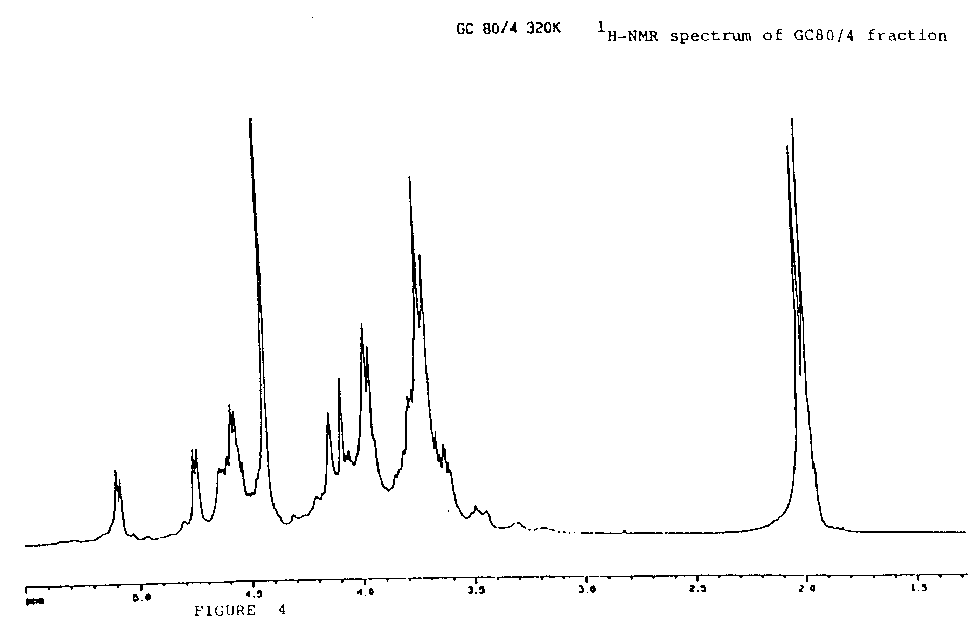

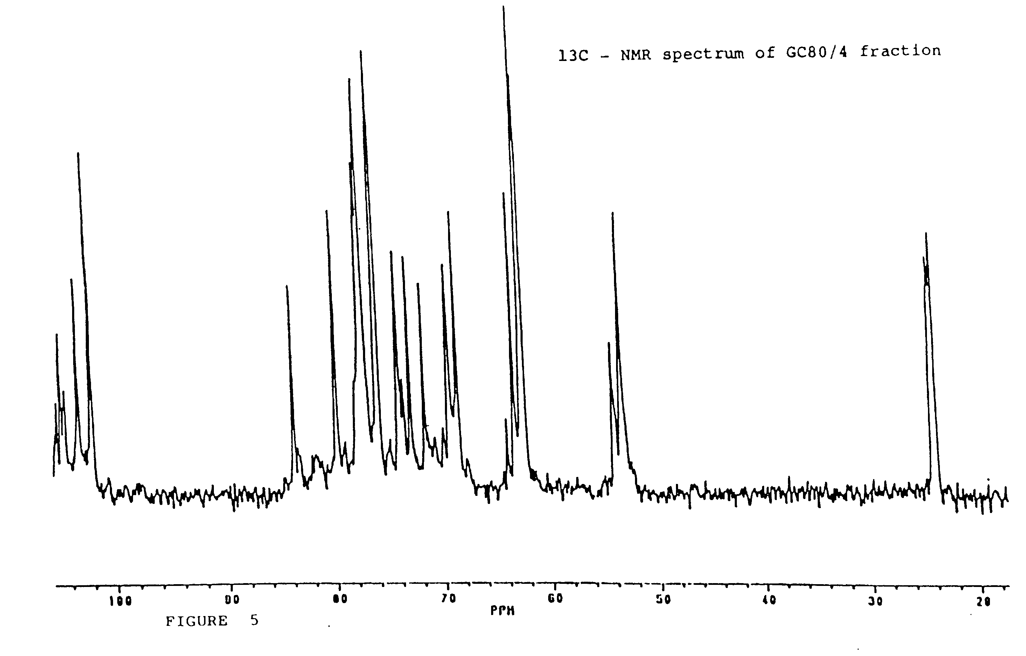

2.4 g of a product similar to that obtained in the LL 108/5 fraction of Example 1 are treated with 9 ml of strongly acid cation exchange resin AG50 W-X4 (BioRad) in form H + (having 1.1 meq/ml of exchange) and 135 mg of Nacl in 24 ml of distilled water. The mass is left under agitation at 37°C for 40 hours. It is filtered. The solution is precipitated with 80% strength ethanol by being left to stand for one night at 4°C. The precipitate is collected, redissolved in 4 ml of water and reprecipitated with ethanol at 4°C. The precipitate is collected, redissolved and reprecipitated at r.t. with 75% strength ethanol. The product coded GC 80/4 is obtained. From integration of the signals of the ¹H-NMR spectrum (Fig. 4) and the ¹³C-NMR spectrum (Fig. 5) the sequence (X) (with p = 2) of Scheme 1 is proved.

### EXAMPLE 2

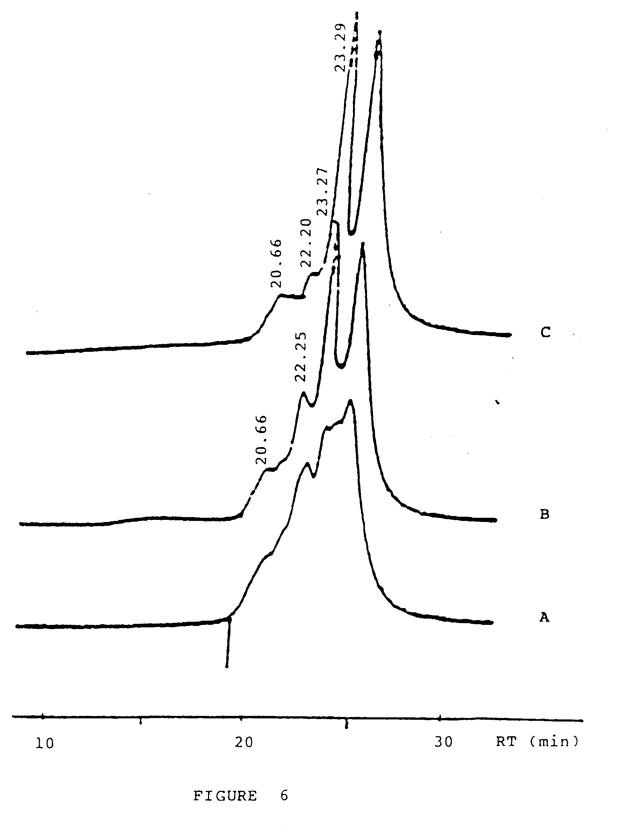

200 mg of fraction LL 108/5 of Example 1 are dissolved in 10 ml of 0.1N HCl in a test tube with closed cap, in a waterbath at 60°C. Samples of 2.5 ml are taken at 0.5, 2, 4 and 6 hours. The solutions taken are neutralized with NaOH at pH 7, then analyzed by HPLC for molecular weights. The profiles in Fig. 6 are obtained. The appearance during hydrolysis of discrete molecular weights of 2900, 2300 and 1670 Daltons is clear. This example demonstrates that the hydrolysis time is an important parameter for the purposes of obtaining the oligosaccharides of the invention. With excess hydrolysis time, destruction of the said oligosaccharides clearly occurs.

### EXAMPLE 3

13.12 g of RO-DS, obtained as described in Example l.b, are dissolved in 656 ml of water to which 80 ml of strongly acid resin AG 50 W-X8 in H⁺ form (BioRad) at 100-200 mesh are added. The reaction mass agitated in a waterbath at 60°C. 3.75 g of NaCl are also added. The pH falls until it is stabilized at 1.1. The reaction mass is heated for a total of two hours. Lastly the solution is filtered from the resin. The resin is washed with 200 ml of distilled water and the entire solution neutralized at pH 7 with NaOH. The solution is concentrated in a rotary evaporator to 70 ml and an NaCl molarity of about 1M. It is then fractioned by gel-filtration on Ultrogel AcA202 (IBF) in a 5 x 90 cm column, at a flow rate of 2 ml/minute. A 1 M NaCl solution is used as the mobile phase.

20 ml fractions are collected. Void volume is discarded. Eluents are monitored by a spectrophotometer equipped with continuous flow chamber reset to 205 nm. Fractions from 13 to 30 (360 ml, A), from 31 to 44 (280 ml, B) from 45 to 60 (320 ml, C) and from 61 to 67 (140 m1, D) are pooled.

Pool A is concentrated to 55 ml and desalted on Trisacryl GF 05 M (IBF) in 5 x 38 cm column.

The fractions A₁ and A₂ are collected and lyophilized. Pool B is concentrated to 50 ml and desalted on Trisacryl GF 05 M. The fractions B₁, B₂, B₃ are collected and lyophilized.

Pool C, too, is concentrated and desalted. It originates, after lyophilization, the fractions C₁, C₂, C₃.

Table II reports the yields, the experimental molecular weights calculated by HPLC on Protein Pak 60-125 columns (Waters), specific rotations and experimental values of SO⁻₃/COO⁻.

**TABLE II**

| Oligosaccharides obtained by demolition of dermatan sulphate of this invention. Experimental values. | | | | |
|---|---|---|---|---|
| | %Yield | MW | [α]²⁰_{D} | SO⁻₃/COO⁻ |
| A₁ | 0.2 | 3000 | nd | nd |
| A₂ | 3.4 | 2900 | -22.2° | 1.78 |
| B₂ | 3.0 | 2300 | -26.2° | 1.76 |
| B₃ | 3.3 | 1500 | | 1.65 |
| C₂ | 50 | 550 | | 1.07 |

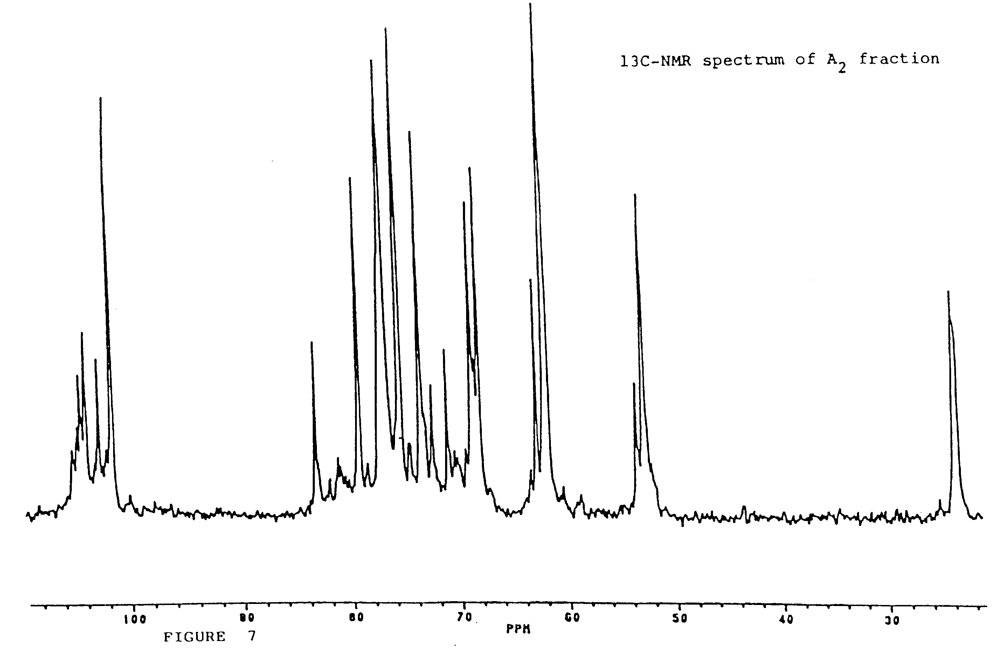

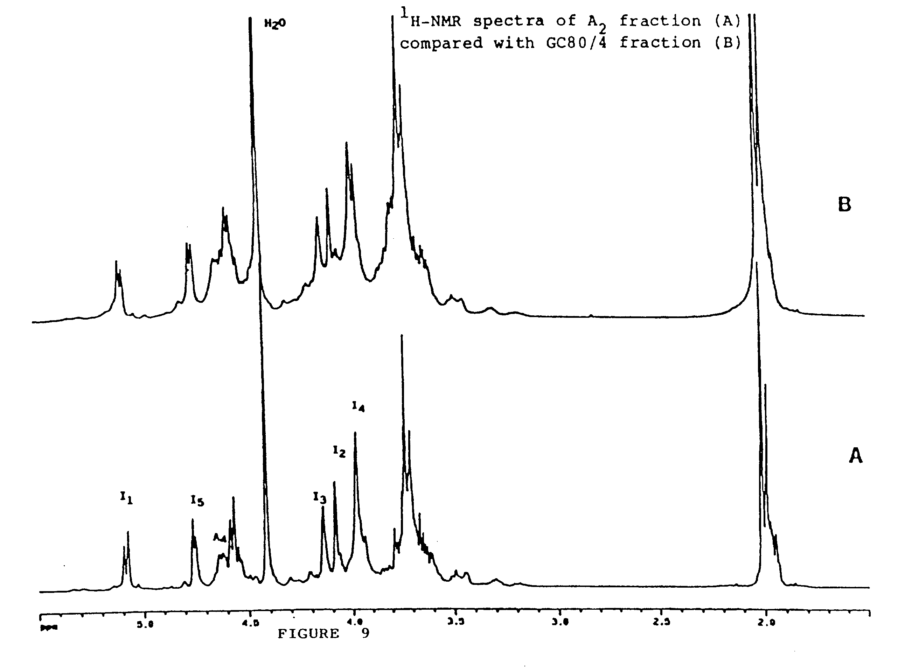

Fractions A₂ and B₂ supplied the 13C-NMR spectra shown in Figs. 7 and 8 respectively. The ¹H-NMR spectrum of the A₂ fraction is also given in Fig. 9. The NMR spectra and the other experimental observations agree with the oligosaccharide structures indicated in formula (X), and specified in Table III. 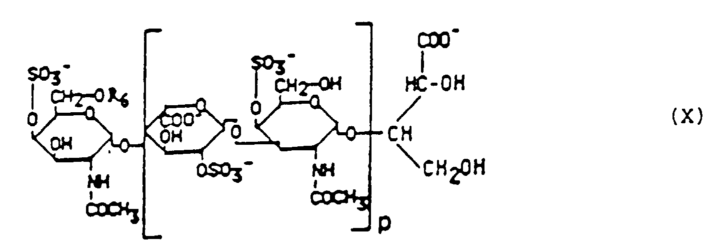 where p takes the values indicated in Table III.

**TABLE III**

| Theoretical values of oligosaccharide sodium salts | | | | |
|---|---|---|---|---|
| | P | R₆ | MW | SO₃⁻/COO⁻ |
| A₁ | 4 | SO₃⁻ | 2986 | 2.0 |
| A₂ | 4 | H | 2882.9 | 1.8 |
| B₂ | 3 | H | 2277.9 | 1.75 |
| B₃ | 2 | H | 1673 | 1.67 |
| C₂ | 0 | H | 462 | 1 |

### EXAMPLE 4

### Biological activity

The fractions B₂ and B₃, obtained in Example 3, were shown to have low activity on HCII (85.21 ± 9.8 and 32.9 ± 10.5 U/mg respectively), from 3 to 8 times less than the activity of the RO-DS fractions from which they originate.

These fractions on the other hand proved to be very active in the inhibition tests on the cytoplasmatic movements of calcium.

The effect of the oligosaccharides of the present invention on platelet aggregation in a mixed cellular suspension of platelets (10⁸/ml) and polymorphonucleate leukocytes (PMN) (5 x 10⁶/ml) was evaluated by pre-incubating the samples with different concentrations of the compounds (1-100 µg/ml). The cellular suspensions were subsequently stimulated with the chemotactic peptide N-formyl-methionyl-leucyl-phenylalanine (fMLP) (1 µM). As shown in Table IV all the compounds examined led to dose-dependent inhibition of platelet aggregation mediated by PMNs activated by fMLP; semi-maximal inhibition was observed at concentrations ranging from 1 to 10 µg/ml for the oligosaccharide fractions B₂, B₃ and A₂.

The effect of the oligosaccharides of the present invention on the cytoplasmatic movements of platelet Ca²⁺ was evaluated by preincubating the mixed cellular suspensions of platelets and PMNs with different doses of the compounds (1-100 µg/ml). The samples were subsequently stimulated with fMLP (1 µM). As in the case of aggregation, this parameter of platelet activation was also inhibited dose-dependently by all the compounds examined (Table IV). The oligosaccharides B₂, B₃ and A₂ completely inhibited the cytoplasmatic movements of Ca²⁺ in concentrations of about 50 µg/ml, while for the dermatan sulphate of Example 1 and for heparin, taken as reference, complete inhibition was obtained at concentrations higher than 200 µg/ml.

**TABLE IV**

| | % Aggregation vs control | % Calcium vs control |
|---|---|---|
| Fraction B₂ | | |
| µg/ml | | |
| 1 | 58±6 | 46±6 |
| 10 | 9±1 | 7±2 |
| 50 | 4±2 | 4±3 |
| 100 | 9±2 | 0±0 |

| Fraction B₃ | | |
|---|---|---|
| µg/ml | | |
| 1 | 47±5 | 42±3 |
| 10 | 7±4 | 9±2 |
| 50 | 3±1 | 4±3 |
| 100 | 3±2 | 0±0 |

| Fraction A₂ | | |
|---|---|---|
| µg/ml | | |
| 1 | 60±5 | 48±7 |
| 10 | 12±6 | 9±3 |
| 50 | 9±2 | 2±1 |
| 100 | 3±5 | 0±0 |

| Heparin | | |
|---|---|---|
| µg/ml | | |
| 1 | 65±3 | 88±7 |
| 10 | 54±4 | 83±6 |
| 50 | 39±2 | 52±2 |
| 100 | 31±4 | 37±11 |

| Dermatan sulphate | | |
|---|---|---|
| from Example 1 | | |
| µg/ml | | |
| 1 | 71±4 | 75±5 |
| 10 | 68±3 | 63±7 |
| 50 | 55±3 | 51±4 |
| 100 | 49±4 | 39±6 |

### EXAMPLE 5

100 kg of pig skin are ground and added to 100 1 of 0.5 M Nacl solution. pH is adjusted to 7.0 with sodium hydroxide. 400 g of proteolytic enzyme called Maxatase^{®} are added. Reaction mass is stirred in a reactor for 8 hours at 60°C. It is heated to 80°C and centrifuged in a liquid-liquid separating centrifuge. Fat phase, about 35 kg is discarded. Aqueous phase is filtered through dicalite filter aid. Filtrate is percolated on a chromatographic column (internal diameter: 10 cm, 125 cm high) containing 10 liters of Lewatit MP 50 A (Bayer), a macroporous strong anionic exchange resin activated in form of Cl⁻. Percolate is discarded. The resin is washed with three volumes of 0.65 NaCl solution. The product is eluted from resin with two volumes of 2.0 N NaCl. The obtained solution is concentrated and desalted by inverse osmosis up to 1 molarity of NaCl. Dermatan sulphate is precipitated with two volumes of methanol, collected and dried 67.9 g of product, almost pure, is obtained. The product, further purified, gives the product coded OPD 950-965 having the following characteristics: Sulphur = 5.63%, uronic acids = 32.74%, SO₃/COO⁻ = 1.04, [α]²⁰_{D} = - 65.5°, disaccharidic composition obtained by enzymatic attack and separation by HPLC: ΔDiOS = 0.6%, ΔDi6S = 1.0%, ΔDi4S = 90%, ΔDi2,4diS = 7.2%, ΔDi4,6diS = 1.2%. ¹³C-NMR spectrum, besides the peculiar signals at δ 177.05 (CO-CH₃), δ 175.79 (CO-IdoAp6), δ 104.52 (IdoApl), δ 103.52 (GalpNAc 1), δ 81.69 (IdoAp 4), δ 77.44 (GalpNAc 4), δ 76.87 (GalpNAc 3), δ 76.02 (GalpNAc 5), δ 72.72 (IdoAp 3), δ 70.98 (IdoAp 2, 5), δ 62.48 (GalpNAc 6), δ 54.45 (GalpNAc 2), δ 24.05 (CO-CH₃), shows the following minor signal: I*₁ (δ102), I*₂ (δ80), I*₄ (δ74), I*₃ (δ69.5), I*₅ (δ68.5) corresponding to iduronic acid 2-sulphate, and also signals at δ 105.3 (GlucAp 1), δ 75.4 (GlucAp 3), δ 74.0 (GlucAp 2), corresponding to glucuronic acid.

The product OPD 950-965 is oxidized with NaIO₄, reduced with NaBH₄ as described in Example 1b. The derivative coded RO-DS is obtained. 20 g of this derivative are hydrolyzed in 1000 ml of 0.1 M HCl for two hours as described in example 2. Solution is cooled, neutralized with NaOH and concentrated to 50 ml by rotary evaporator. The solution is desalted on Trisacryl GF 05 M (IBF) in a chromatographic column (internal diameter: 5 cm, 38 cm high). The column effluent is monitored by U.V. detector set at 205 nm. Elution peak is collected, and the tail containing mainly the compounds XI and XII (see Scheme 1) is discarded. The solution is concentrated to 50 ml and oligosaccharides are separated by Exclusion Molecular Chromatography on AcA 202 (IBF) in a column 90 cm high (i.d. diameter 5 cm). 1 M NaCl is used as mobile phase. The operating procedures of Example 3 are followed. The fractions reported in Table V are obtained.

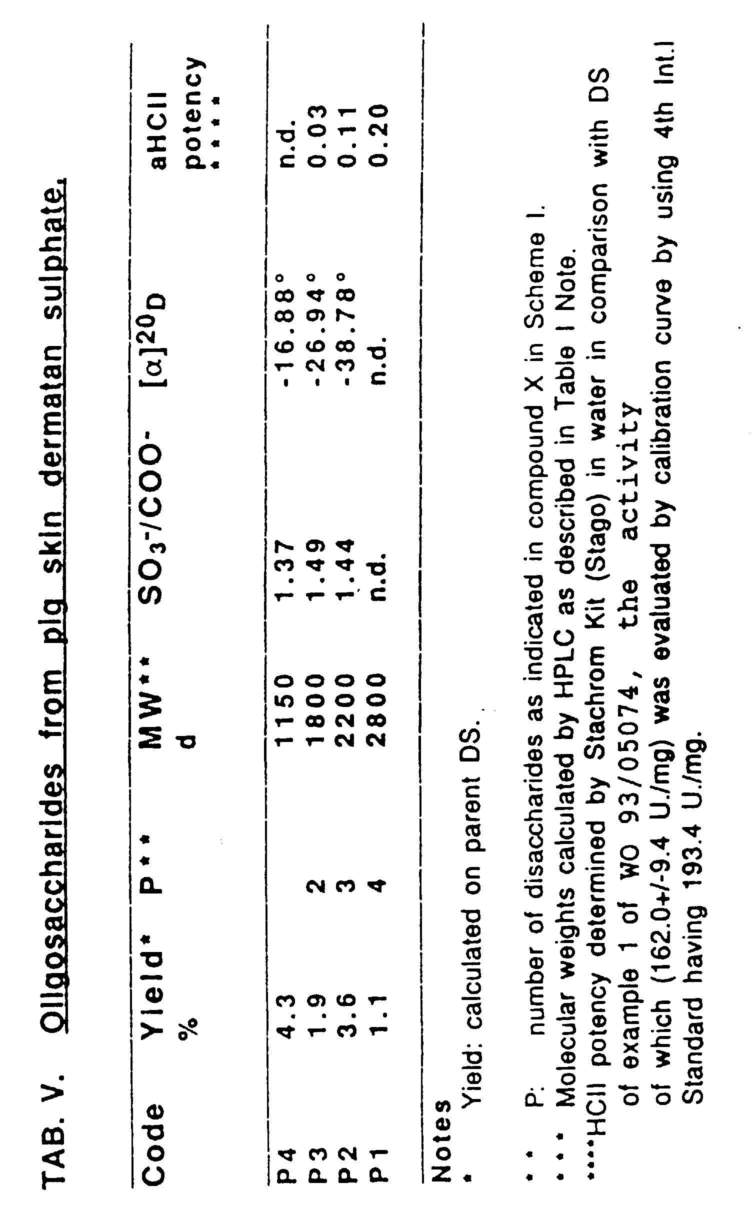

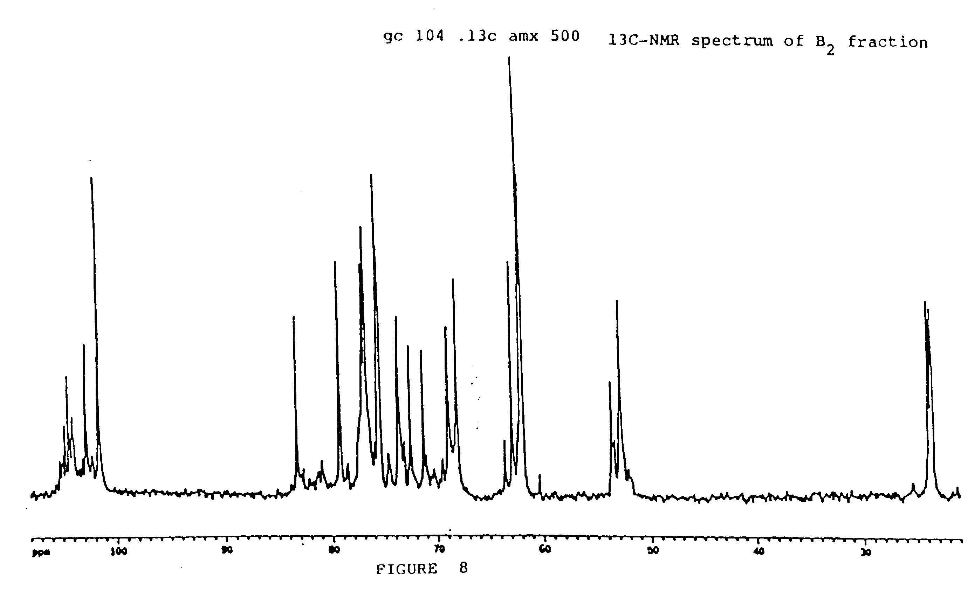

The fraction P2 in the ¹³C.NMR spectrum shows all the signals as reported in Figure 8. Besides, it shows signals at δ 73.8 (GluAp 2), δ75.3 (GluAp 3), δ105.3 (GluAp 1), relevant in the glucuronic acid present in the oligosaccharide fragment in a 30% amount of uronic acids.

100 mg of the fraction P2 are fractionated by strong anion exchange HPLC (S.A.X. HPLC) on 10 µ Spherisorb 7.5 x 300 mm column (Sep Phase U.K.) with mobile phase consisting of increasing concentrations of NaCl at a flow rate of 1.5 ml/minute. Collected fractions are desalted and lyophilized. Their characteristics are reported in Table VI.

**TABLE VI**

| Oligosaccharides from pig skin DS, separated by SAX HPCL | | | | | |
|---|---|---|---|---|---|
| Code | % Yield | P | MW | SO₃/COO⁻ | HCII potency |
| 113 P2 0M | 0.8 | 3 | 2100 | 1.25 | n.d. |
| 113 P2 0.5M | O.8 | 3 | n.d. | n.d. | n.d. |
| 113 P2 0.75M | 1.05 | 3 | 2280 | 1.75 | 0.2 |
| 113 P2 1.00M | 0.94 | 3 | 2280 | 1.75 | 0.21 |
| Note %Yield: calculated on parent Dermatan sulphate | | | | | |

The ¹³C-NMR and ¹H-NMR spectra of the fraction 113P2/1M confirm its structure of heptasaccharide+Remnant composed solely of Iduronic acid 2-sulphate and N-acetylgalactosamine 4-sulphate.

## Claims

1. Oligosaccharides of dermatan sulphate having pharmacological activity, characterized by the general formula (I) 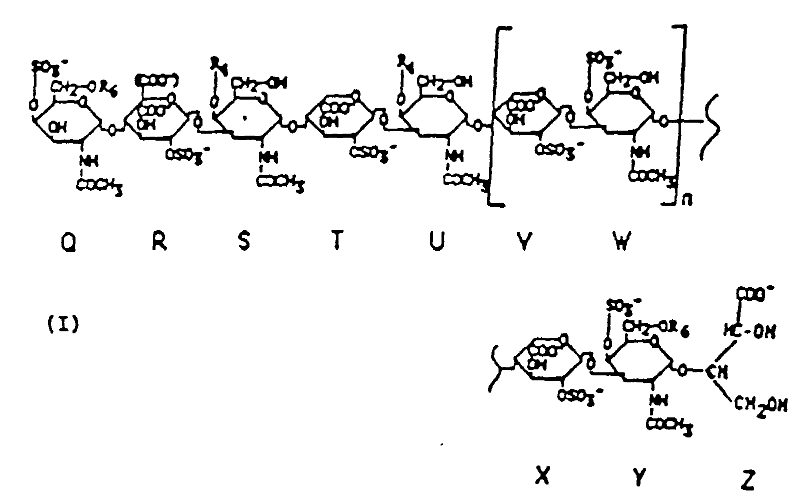 also comprising the sequences STUVWXYZ, UVQXUZ and SRQXYZ,
in which:
n = 0, 1 or 2;
R₄ = SO₃⁻ or H;
R₆ = H or SO₃⁻;
Z = remnant of demolition of a uronic acid;
Q, S, U, W and Y = galactosamines;
R, T, V and X = residues of iduronic acid 2-sulphate, at least one of them however being possibly a residue of glucuronic acid 2-sulphate, having an SO₃⁻/COO⁻ ratio between 1.65 and 2.0.

2. An oligosaccharide according to Claim 1, selected from the group consisting of QRSTUXYZ, QRSTUVWXYZ, QRSTUVWVWXYZ; where Q, R, S, T, U, V, W, X, Y and Z are defined as above.

3. Oligosaccharides according to Claims 1 and 2, characterized by the ¹³C-NMR spectra in Figs. 5, 7 and 8, an SO₃⁻/COO⁻ ratio between 1.65 and 2.0, and a molecular weight lying between 3500 and 1000 Daltons.

4. Process for the production of the oligosaccharides according to claims 1-3, comprising the following steps:
a) dermatan sulphate (DS) containing a high percentage of disulphate disaccharides of formula (IV) 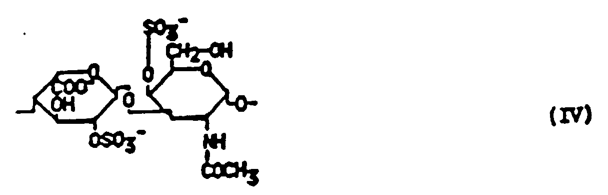 measurable by enzymatic hydrolysis with chondroitinase ABC and evaluation of corresponding unsaturated disaccharide Di-diS_{B}, and characterized by a ¹³C-NMR spectrum having the characteristic minor signals I*₁ (δ 102), I*₂ (δ 80), I*₄ (δ 74), I*₃ (δ 69.5), I*₅ (δ 68.6), is subjected to oxidation with a 0.5 M solution of periodic acid in a neutral medium:
b) the oxidation product obtained, having the C₂-C₃ bonds of all the non-sulphated uronic acids oxidized to dialdehydes of type (V) 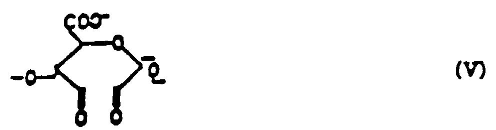 is reduced with sodium borohydride to a di(hydroxymethyl) derivative (VI) 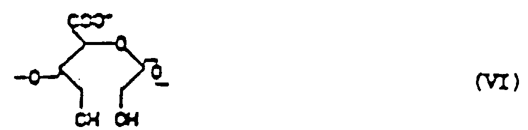
c) the product obtained, designated "oxidized and reduced dermatan sulphate" (RO-DS), is subjected to controlled acid hydrolysis which gives rise only to hydrolysis of the semi-acetal bonds between uronic acids, with the C₂-C₃ bonds oxidized (open), and aminosugars, said hydrolysis is carried out by a "buffer" system consisting of a polysulphonic resin, in H⁺ form, in the presence of a concentration of salt such as to give the optimal hydrolysis pH between 1 and 2 and for an optimal reaction time between 0.5 and 3 hours.

5. Process according to Claim 4, characterized in that the oligosaccharide fractions obtained are separated by molecular exclusion chromatography, and, if necessary, by anion exchange chromatography.

6. Pharmaceutical compositions containing as the active principle one or more oligosaccharides of dermatan sulphate according to Claims 1-3.

7. Compositions according to Claim 6, for use as an antiarthritic, anti-inflammatory and platelet antiaggregating activity.

8. Compositions according to Claim 6 for parenteral or oral or topical administration, in the form of injectable sterile solutions or suspensions, compressed capsules, syrups, or creams or ointments.

## Patentansprüche

1. Oligosaccharide von Dermatansulfat, die pharmakologisch wirksam sind, gekennzeichnet durch die allgemeine Formel (I) 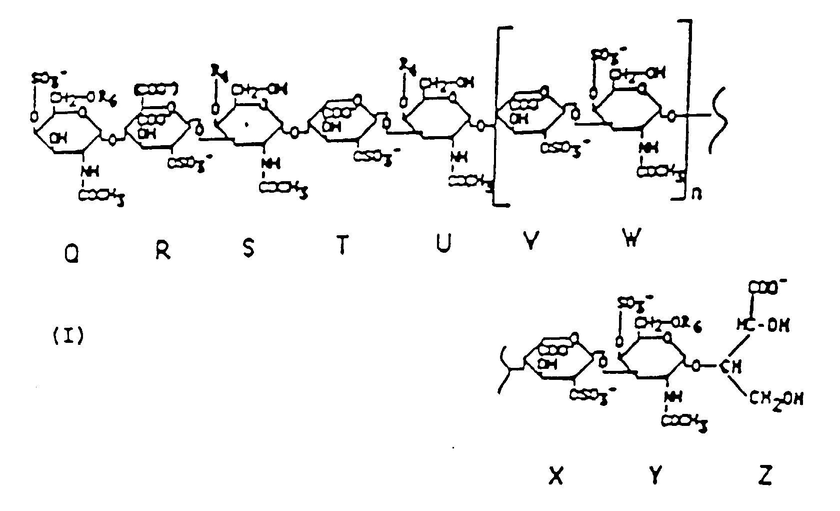 die auch die Sequenzen STUVWXYZ, UVQXUZ und SRQXYZ umfassen, worin
n = 0, 1 oder 2;
R₄ = SO₃⁻ oder H;
R₆ = H oder SO₃⁻;
Z = Abbaurest von Uronsäure;
Q, S, U, W und Y = Galactosamine;
R, T, V und X = Reste von Iduronsäure-2-sulfat, wobei jedoch mindestens einer von diesen möglicherweise ein Rest von Glucuronsäure-2-sulfat mit einem SO₃⁻/COO⁻-Verhältnis zwischen 1,65 und 2,0 ist.

2. Oligosaccharid nach Anspruch 1, ausgewählt aus der Gruppe die besteht aus QRSTUXYZ, QRSTUVWXYZ, QRSTUVWWXYZ; worin Q, R, S, T, U, V, W, X, Y und Z wie oben definiert sind.

3. Oligosaccharide nach den Ansprüchen 1 und 2, gekennzeichnet durch das ¹³C-NMR-Spektrum der Figuren 5, 7 und 8, ein SO₃⁻/COO⁻-Verhältnis zwischen 1,65 und 2,0 und ein Molekulargewicht das zwischen 3500 und 1000 Dalton liegt.

4. Verfahren zur Herstellung der Oligosaccharide nach den Ansprüchen 1 bis 3, das die folgenden Schritte umfaßt:
a) Dermatansulfat (DS), das einen hohen Prozentsatz von Disulfatdisacchariden der Formel (IV) enthält, 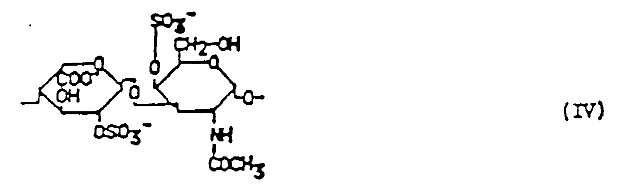 meßbar durch enzymatische Hydrolyse mit Chondroitinase ABC und Bewertung des entsprechenden ungesättigten Disaccharids Di-diS_{B} und gekennzeichnet durch ein ¹³C-NMR-Spektrum mit den charakteristischen Nebensignalen I*₁ (δ102), I*₂ (δ 80), I*₄ (δ 74), I*₃ (δ 69,5), I*₅ (δ 68,6), wird der Oxidation mit einer 0,5 M Lösung von Periodsäure in einem neutralen Medium unterworfen:
b) das erhaltene Oxidationsprodukt, das die C₂-C₃-Bindungen der gesamten nichtsulfatisierten Uronsäuren zu Dialdehyden des Typs (V) oxidiert hat, 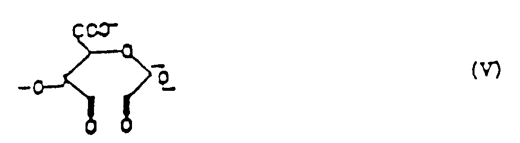 wird mit Natriumborhydrid zu einem Di(hydroxymethyl)-derivat (VI) reduziert 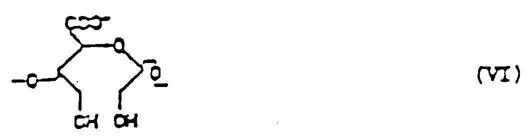
c) das erhaltene Produkt, das als "oxidiertes und reduziertes Dermatansulfat" (RO-DS) bezeichnet wird, wird der kontrollierten sauren Hydrolyse unterworfen, die lediglich zur Hydrolyse der Semiacetal-Bindungen zwischen den Uronsäuren mit den oxidierten C₂-C₃-Bindungen (offen) und Aminozuckern führt, wobei die Hydrolyse durch ein "Puffer"-System durchgeführt wird, das aus Polysulfonsäureharz in der H⁺-Form besteht, in Gegenwart einer Salzkonzentration, so daß der optimale Hydrolyse-pH zwischen 1 und 2 und die optimale Reaktionsdauer zwischen 0,5 und 3 Stunden liegt.

5. Verfahren nach Anspruch 4, dadurch gekennzeichnet, daß die erhaltenen Oligosaccharidfraktionen durch molekulare Ausschlußchromatographie und falls nötig durch Anionenaustauschchromatographie getrennt werden.

6. Pharmazeutische Zusammensetzung die als aktiven Bestandteil ein oder mehrere Oligosaccharide des Dermatansulfats nach den Ansprüchen 1 bis 3 enthält.

7. Zusammensetzung nach Anspruch 6 zur Verwendung als Antiarthritikum, entzündungshemmendes Mittel und Thrombozytenaggregationshemmer.

8. Zusammensetzung nach Anspruch 6 für die parenterale oder orale oder topische Verabreichung in der Form von injizierbaren sterilen Lösungen oder Suspensionen, komprimierten Kapseln, Sirups oder Cremes oder Salben.

## Revendications

1. Oligosaccharides de sulfate de dermatan ayant une activité pharmacologique, caractérisés par la formule générale (I) 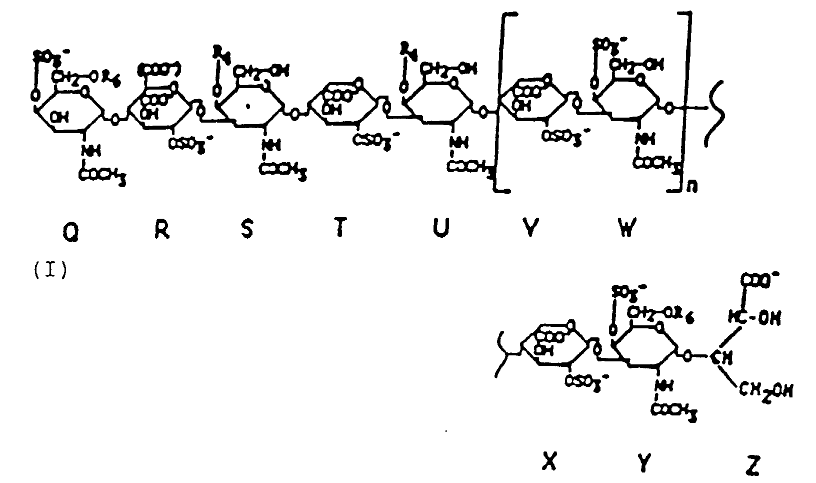 comprenant également les séquences STUVWXYZ, UVQXUZ et SRQXYZ,
dans laquelle :
n = 0, 1 ou 2 ;
R₄ = SO₃⁻ ou H ;
R₆ = H ou SO₃⁻ ;
Z = résidu de démolition d'un acide uronique ;
Q, S, U, W et Y = galactosamines ;
R, T, V et X = résidus de 2-sulfate d'acide iduronique, l'un d'entre eux au moins étant toutefois éventuellement un résidu de 2-sulfate d'acide glucuronique, ayant un rapport SO₃⁻/COO⁻ compris entre 1,65 et 2,0.

2. Oligosaccharide selon la revendication 1, choisi dans le groupe composé de QRSTUXYZ, QRSTUVWXYZ, QRSTUVWVWXYZ, où Q, R, S, T, U, V, W, X, Y et Z sont définis comme ci-dessus.

3. Oligosaccharides selon les revendications 1 et 2, caractérisés par les spectres RMN-¹³C des Fig. 5, 7 et 8, un rapport SO₃⁻/COO⁻ entre 1,65 et 2,0, et une masse moléculaire comprise entre 3500 et 1000 Daltons.

4. Procédé de production des oligosaccharides selon les revendications 1-3, comprenant les étapes suivantes :
a) un sulfate de dermatan (DS) ayant une teneur élevée en disulfate disaccharides de formule (IV) 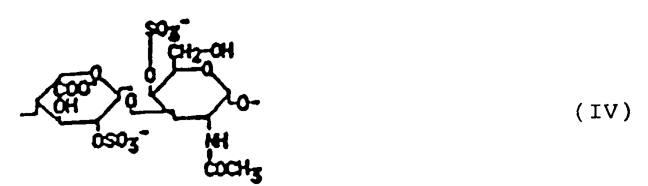 mesurable par hydrolyse enzymatique avec une chondroïtinase ABC et évaluation du disaccharide Di-diS_{B} non saturé correspondant, et caractérisé par un spectre RMN-¹³C ayant les signaux mineurs caractéristiques I*₁ (δ 102), I*₂ (δ 80), I*₄ (δ 74), I*₃ (δ 69,5), I*₅ (δ 68,6), est soumis à une oxydation avec une solution 0,5 M d'acide periodique dans un milieu neutre ;
b) le produit d'oxydation obtenu, dont les liaisons en C₂-C₃ de tous les acides uroniques non sulfatés sont oxydées en dialdéhydes de type (V), 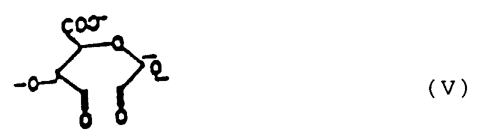 est réduit avec du borohydrure de sodium en un dérivé di(hydroxyméthyle) (VI) 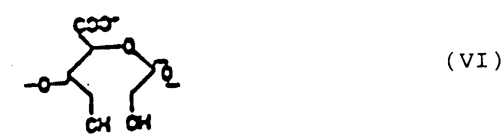
c) le produit obtenu, appelé "sulfate de dermatan oxydé et réduit" (RO-DS), est soumis à une acidolyse contrôlée qui induit seulement l'hydrolyse des liaisons semi-acétaliques entre des acides uroniques, avec les liaisons C₂-C₃ oxydées (ouvertes), et des sucres aminés, ladite hydrolyse étant effectuée par un système "tampon" constitué par une résine polysulfonique, sous forme H⁺, en présence d'une concentration de sel pour obtenir le pH d'hydrolyse optimal entre 1 et 2 et pendant un temps de réaction optimal entre 0,5 et 3 heures.

5. Procédé selon la revendication 4, caractérisé en ce que les fractions oligosaccharides obtenues sont séparées par chromatographie d'exclusion moléculaire et, si nécessaire, par chromatographie par échange d'anions.

6. Compositions pharmaceutiques contenant à titre de principe actif un ou plusieurs oligosaccharides de sulfate de dermatan selon les revendications 1-3.

7. Compositions selon la revendication 6, destinées à être utilisées pour leur activité anti-arthritique, anti-inflammatoire et anti-agrégation plaquettaire.

8. Compositions selon la revendication 6 pour une administration par voie parentérale ou orale ou locale, sous forme de solutions ou suspensions stériles injectables, de gélules comprimées, de sirops, ou de crèmes ou de pommades.
